**Europäisches Patentamt**

**European Patent Office**

**Office européen des brevets**

(19)

(11) Veröffentlichungsnummer: **0 098 015**
**B1**

(12) # EUROPÄISCHE PATENTSCHRIFT

(45) Veröffentlichungstag der Patentschrift:
**16.09.87**

(51) Int. Cl.⁴: **H 04 N 9/64**

(21) Anmeldenummer: **83200926.0**

(22) Anmeldetag: **22.06.83**

(54) Schaltungsanordnung zum Erhöhen der Kantenschärfe eines Videosignals.

(30) Priorität: **24.06.82 DE 3223580**

(43) Veröffentlichungstag der Anmeldung:
**11.01.84 Patentblatt 84/2**

(45) Bekanntmachung des Hinweises auf die Patenterteilung:
**16.09.87 Patentblatt 87/38**

(84) Benannte Vertragsstaaten:
**DE FR GB IT**

(56) Entgegenhaltungen:
**DE - B - 1 562 170**
**FR - A - 2 110 207**

(73) Patentinhaber: **Philips Patentverwaitung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB IT**

(72) Erfinder: **Sonnenberger, Paul, Dachsberg 11E,
D-2000 Hamburg 61 (DE)**

(74) Vertreter: **Hartmann, Heinrich, Dipl.-Ing. et al, Philips
Patentverwaltung GmbH
Wendenstrasse 35 Postfach 10 51 49,
D-2000 Hamburg 1 (DE)**

**Beschreibung**

Die Erfindung bezieht sich auf eine Schaltungsanordnung zum Erhöhen der Kantenschärfe eines Videosignals, insbesondere eines Farbartsignals oder eines Farbartdifferenzsignals, bei dem an der Stelle eines scharfen Amplitudensprunges ein Übergangsbereich mit begrenzter Steilheit auftritt, wobei ein am Anfang des Übergangsbereiches auftretender (erster) Signalwert vom Signaleingang über einen Schalter dem Eingang eines Speichers zugeführt wird, dessen Ausgang während des Übergangsbereiches mit dem Signalausgang verbunden ist, und wobei danach ein bald nach dem Endes des Übergangsbereiches auftretender (zweiter) Signalwert dem Signalausgang zugeführt wird, wobei weiter ein Schaltsignal aus dem Videosignal gewonnen wird mittels eines Schaltsignalgenerators derart, dass die Anfangsflanke des Schaltsignals beim Einsetzen des Übergangsintervalles und seine rückwärtige Flanke beim Ende des Übergangsintervalles auftritt.

Wird einem Videosignal-Übertragungskanal ein Signal mit sprunghaftem Übergang zwischen zwei Amplitudenwerten zugeführt, so ergibt sich infolge der begrenzten Bandbreite nur ein mehr oder weniger flach geneigter Übergang. Zwischen dem Ausgangswert und dem Endwert tritt dann ein Übergangsbereich auf, der, weitgehend unabhängig von der Grösse des Amplitudensprunges, eine bestimmte Breite hat. Diese ist von der Frequenzbandbreite des Farbsignal-Übertragungskanales abhängig und kann daher z.B. in verschiedenen Fernsehgeräte-Typen unterschiedliche Werte haben.

Aus der DE-AS 1 562 170 ist eine derartige Schaltung bekannt, bei der das Eingangssignal über eine Verzögerungsleitung geführt und der an ihrem Ausgang vor dem Übergangsbereich auftretende (erste) Signalwert einem Speicher zugeführt und am Signalausgang wirksam gemacht wird. Nach einer Verzögerungszeit, die etwa der Hälfte des Übergangsintervalles entspricht, wird der am Eingang der Verzögerungsleitung auftretende, dem Wert nach dem Übergangsbereich entsprechende (zweite) Signalwert dem Speicher zugeführt und bis zum Ende des am Ausgang der Verzögerungsleitung auftretenden Übergangsbereiches zum Ausgang übertragen.

Der Übergangsbereich wird so durch einen Sprung zwischen dem ersten und dem zweiten Signalwert ersetzt, der in der Mitte des am Ausgang der Verzögerungsleitung auftretenden Übergangsbereiches liegt. Danach wird wieder der Ausgang der Verzögerungsleitung mit dem Signalausgang der Schaltung verbunden.

Die bekannte Schaltung benötigt eine Mehrzahl von Schaltern und wenigstens eine Verzögerungsleitung, die im Hinblick auf die Breite des Übergangsintervalles bemessen werden muss. Da die Intervallbreite des Übergangsbereiches von der Frequenzbandbreite abhängig ist und diese wiederum von der Ausbildung des gesamten Farbsignal-Übertragungskanals bedingt wird, müssten die verwendeten Verzögerungseinrichtungen einstellbare bzw. abgleichbare Verzögerungszeiten haben. Die bekannte Schaltung erfordert daher entweder einen hohen Aufwand oder einen Kompromiss, der keine optimalen Ergebnisse bringen kann.

Der Erfindung liegt daher die Aufgabe zugrunde, die Schaltungsanordnung zu vereinfachen und insbesondere durch Vermeidung einer zusätzlichen Signal-Verzögerungsleitung für den Aufbau in integrierter Halbleitertechnik geeignet zu machen.

Diese Aufgabe wird dadurch gelöst, dass gemäss der Erfindung mittels des Schaltsignals der am Eingang des Speichers liegende Schalter so gesteuert wird, dass der Speichereingang praktisch während des ganzen Übergangsbereiches vom Signaleingang getrennt ist, so dass der vor dem Übergangsintervall auftretende erste Signalwert auf dem Speicher weiter festgehalten und praktisch während des ganzen Übergangsbereiches zum Signalausgang übertragen wird.

Wenn die Schaltungsanordnung nach der Erfindung das Helligkeitssignal verarbeitet, wird der Helligkeitssprung, der ursprünglich etwa im Anfangsteil des Übergangsbereiches auftritt, an das Ende des Übergangsbereiches verschoben. Diese Verschiebung ist jedoch bezogen auf den übrigen Bildinhalt minimal und im übrigen für alle Kanten gleich, so dass zwar eine Verbesserung der Bildschärfe, aber keine Beeinträchtigung durch die kleine Kantenverschiebung eintritt.

Wenn in einer Schaltungsanordnung nach der Erfindung ein Farbsignal, z.B. das Farbartsignal oder ein Farbdifferenzsignal, verarbeitet wird, ergibt sich ebenfalls eine entsprechende Verschiebung der Farbkante an das Ende des Übergangsbereiches. Nach einer Weiterbildung der Erfindung wird in diesem Falle das Helligkeitssignal um eine entsprechende Zeit verzögert, so dass der Helligkeitssprung und der Farbsignalsprung im wiedergegebenen Bild wenigstens nahezu an der gleichen Stelle auftreten.

Nach einer vorteilhaften Weiterbildung der Erfindung kann der Ausgang des Speichers dauernd an den Signalausgang angeschlossen sein und der Eingang des Speichers normalerweise mit dem Signaleingang verbunden sein und mittels des Schalters während des Übergangsintervalles vom Signaleingang getrennt werden. Dadurch wird eine weitere Vereinfachung des Schaltungsaufbaues erreicht.

Nach einer weiteren Ausführung der Erfindung wird das Schaltsignal dadurch gewonnen, dass das Videosignal in einer Differentiierstufe differentiiert und danach gleichgerichtet und das so erhaltene Änderungssignal über eine, nur annähernd maximale Werte durchlassende, Abschneidestufe zugeführt wird, die das Schaltsignal liefert. So ist sichergestellt, dass das Schaltsignal nur dann auftritt, wenn im Videosignal eine wenigstens annähernd maximal steile Amplitudenänderung auftritt, wie sie sich bei einem Sprung im ursprünglichen Signal ergibt.

Vorzugsweise wird dazu das Videosignal einerseits direkt und andererseits über ein Integrationsglied den Eingängen eines Differenzverstärkers zugeführt, dessen beiden gegenläufigen Ausgangssignale in ihren in einer, z.B. der positiven, Richtung verlaufenden Teilen über je einen Gleichrichter kombiniert werden, so dass, unabhängig von der Änderungsrichtung, ein dem Betrag der Änderung proportionales Signal erhalten wird, wobei die Integrations-Zeitkonstante kleiner als, vorzugsweise klein gegen, die Breite des Übergangsintervalles ist.

In diesem Differenzverstärker wird durch das Integrationsglied die Differenz zwischen einem jeweiligen Signalwert und einem kurz davor auftretenden Signalwert gebildet, wodurch ein Ausgangssignal geliefert wird, das der Steilheit bzw. dem Differentialquotienten des Videosignals entspricht. Durch die Gleichrichtung wird das Ausgangssignal vom Vorzeichen unabhängig und entspricht dem Betrag ohne Vorzeichen. Es werden so in gleicher Weise Signalsprünge zu höheren wie zu niedrigeren Amplitudenwerten ausgewertet.

Nach einer weiteren vorteilhaften Weiterbildung der Erfindung wird das Schaltsignal einerseits direkt und andererseits über ein Integrationsglied den Eingängen eines Differenzverstärkers zugeführt, dessen Ausgangssignal den Umschalter steuert, wobei die Integrations-Zeitkonstante in der Grössenordnung der Breite des Übergangsintervalles liegt. Dadurch wird erreicht, dass beim Auftreten der rückwärtigen Flanke des Schaltsignals das Umschalten im Differenzverstärker mit steilerer Flanke erfolgt, so dass auch das so erhaltene Umschaltsignal an beiden Seiten scharfe Flanken aufweist.

Die Erfindung wird nachstehend anhand der Zeichnung beispielsweise näher erläutert, in der

Fig. 1 ein Blockschaltbild der Erfindung zeigt, während

Fig. 2 Zeitdiagramme von Signalverläufen wiedergibt, die in der Schaltungsanordnung nach der Erfindung auftreten.

Fig. 3 gibt eine mehr detaillierte Schaltung nach der Erfindung wieder.

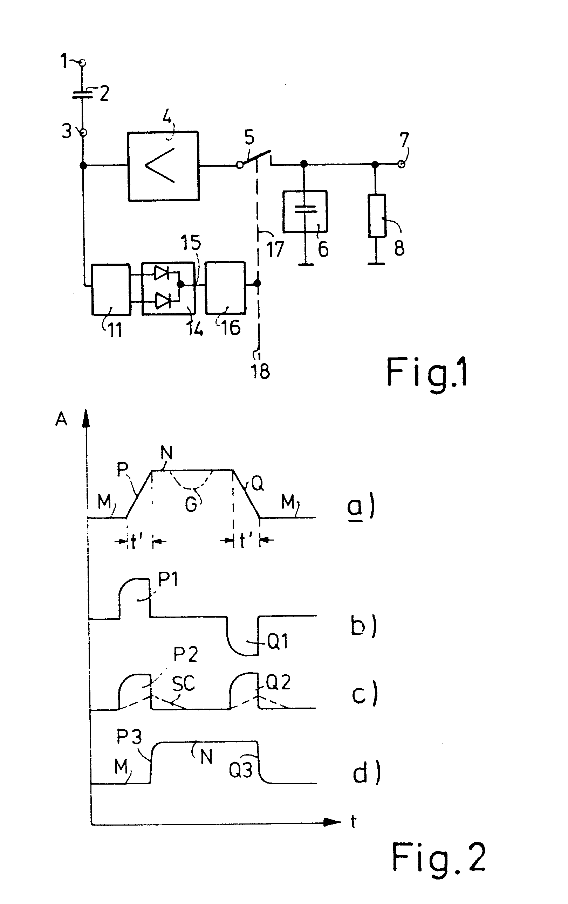

In Fig. 1 wird ein videofrequentes ankommendes Farbsignal, z.B. das Farbdifferenzsignal (R–Y) oder (B–Y), das in einem Farbfernsehempfänger von einem Farbträger durch Demodulation erhalten ist, von einer Eingangsklemme 1 über einen Trennkondensator 2 einem Schaltungspunkt 3 (Signaleingang) und danach über einen Verstärker 4 einem, vorzugsweise elektronischen, Schalter 5 zugeführt. Dieser Schalter 5 ist normalerweise geschlossen, so dass das ankommenden Farbsignal dem Eingang 6a eines andererseits an Erde liegenden Speichers 6 zugeführt wird. Der Ausgang 6b des Speichers 6 ist mit der Ausgangsklemme 7 verbunden, die als Signalausgang der Schaltung dient. Der Speicher kann durch einen kleinen Kondensator 6c gebildet werden, der zwischen den verbundenen Klemmen 6a und 6b einerseits und Erde andererseits eingeschaltet ist. Der Kondensator 6c wird, bei geschlossenem Schalter 5, über den Verstärker 4 mit niedriger Ausgangsimpedanz durch das ankommende Farbdifferenzsignal laufend umgeladen, und er ist an der Klemme 7 nur mit einer hochohmigen Impedanz 8, z.B. der Eingangsimpedanz eines Differenzverstärkers, belastet.

Das Eingangssignal von dem Punkt 3 wird weiter einem differentiierenden Verstärker 11 zugeführt, der zwei Ausgangsklemmen 12 und 13 aufweist, an dem die aus dem Eingangssignal abgeleiteten differentiierten Signale mit entgegengesetztem Änderungssinn auftreten. Diese Signale werden einem doppelten Gleichrichter 14 zugeführt derart, dass an dessen Ausgang 15 die differentiierten Signalteile gegenüber einem Mittelwert mit gleicher Änderungsrichtung auftreten.

Dem Verstärker 11 in Fig. 1 kann ein Signal gemäss Fig. 2a, z.B. ein Farbdifferenzsignal zugeführt werden, das im Verlauf der Zeit zwischen einem niedrigeren Wert M zu einem grösseren Wert N und dann zum Wert M wieder zurück wechselt. Der Übergang zwischen den Werten M und N wird in einem Originalbild in der Regel sprungartig vor sich gehen. Infolge der Frequenzbandbegrenzung im Farbsignal-Übertragungskanal tritt jedoch zwischen den Amplitudenstufen M und N ein Übergangsbereich t' auf, in dem der Amplitudenverlauf P bzw. Q mit einer begrenzten endlichen Steilheit geneigt ist. Durch diese Neigung ergibt sich, dass der Amplitudenübergang P bzw. Q ein Zeitintervall t' in Anspruch nimmt. Der ursprünglich scharfe Farbübergang wird somit auseinandergezogen und würde im wiedergegebenen Bild unscharf erscheinen.

In der Differentiierstufe 11 wird der Signalverlauf nach Fig. 2a derart verformt, dass ein differentiiertes Signal nach Fig. 2b auftritt: Im Bereich der konstant bleibenden Signalwerte M und N hat dieses differentiierte Signal den Wert Null – oder einen anderen durch die Schaltung gegebenen festen Wert –. Im Bereich langsamerer, durch den Bildinhalt bedingter Amplitudenänderungen – in Fig. 2a bei G gestrichelt angedeutet – ergeben sich im differentiierten Signal kleinere Amplitudenänderungen G. Während der Amplitudenübergänge P und Q tritt im differentiierten Signal ein maximaler impulsartiger Amplitudensprung P1 bzw. Q1 auf, wobei entsprechend dem Anstieg bzw. dem Abfall des Farbsignals das Signal P1 positiv und das Signal Q1 negativ gegenüber dem Mittelwert abweicht. Da die Umschaltung zum Erhöhen der Schärfe unabhängig vom Vorzeichen der Amplitudenänderung erfolgen soll, wird das von der Differentiierstufe 11 an zwei Ausgängen 12 und 13 mit entgegengesetztem Amplitudenverlauf gelieferte Signal im Gleichrichter 14 gleichgerichtet derart, dass am Ausgang 15 ein Übergangssignal nach Fig. 2c auftritt; in diesem weisen die den Änderungsbereichen entsprechenden impulsartigen Signale P2 und Q2 gleiche Abweichungsrichtung gegenüber dem Ruhewert, jeweils mit der Intervallbreite t' auf. Da nur die ursprünglich sprungartigen steilen Übergänge erfasst werden sollen, ist in der Stufe 14 den Gleichrichtern eine Schwellwerteinrichtung nachgeschaltet, durch die kleinere Änderungssignale – G1 in Fig. 2b – unterdrückt werden.

Das so erhaltene Signal vom Ausgang 15 der Stufe 14 wird einem Umschaltsignal-Generator 16 zugeführt, der gemäss der in Fig. 1 gestrichelt angedeuteten Linie 17 ein Umschaltsignal liefert, durch das der Schalter 5 geöffnet wird, sobald ein Übergangssignal P2 bzw. Q2 auftritt.

In der dargestellten Schaltung wird normalerweise das an der Klemme 1 ankommende Signal, ggf. verstärkt, der Ausgangsklemme 7 und damit der Eingangsimpedanz 8 einer nachfolgenden Schaltung zugeführt. Dieses Signal wird von dem einen niedrigen Innenwiderstand aufweisenden Verstärker 4 gleichzeitig einem mit der Ausgangsklemme verbundenen Speicher 6 zugeführt, welches Signal auf dem Speicher 6 sich normalerweise laufend mit dem ankommenden Signal ändert.

Sobald jedoch im ankommenden Signal ein Übergang P bzw. Q (vgl. Fig. 2a) auftritt, wird durch die vorstehend beschriebene Schaltung 11 bis 16 der Schalter 5 durch das Umschaltsignal 17 geöffnet. Das Signal an der Ausgangsklemme 7 folgt dann nicht mehr dem allmählich ansteigenden bzw. abfallenden Verlauf gemäss dem Kurvenstück P, sondern der vor diesem Übergangsintervall t′ auftretende Amplitudenwert M wird auf dem Speicher 6 weiter festgehalten und an die Ausgangsklemme 7 abgegeben. Erst wenn der Übergangsbereich – Intervall t′ – beendet ist, fällt das Umschaltsignal 17 weg, und das Signal am Ausgang 7 springt, entsprechend der kurzen Schaltzeit des Schalters 5, nahezu momentan auf den dann vom Eingangssignal angebotenen Wert N. An der Ausgangsklemme 7 ergibt sich somit ein Verlauf gemäss Fig. 2d, in dem der Farbübergang auf der Flanke P3 bzw. Q3 ersichtlich wesentlich steiler ist als im ursprünglichen Signal nach Fig. 2a.

Der Farbamplitudensprung hat im ursprünglichen Signal etwa am Anfang der Flanke P gelegen und ist dann zeitlich nach hinten verbreitert worden. Wenn ausser dem Farbamplitudensprung auch ein Helligkeitssprung auftritt, würde der etwa am Anfang des schrägen Verlaufes P nach Fig. 2a liegen, während nach Fig. 2d der Farbsprung jetzt auf das Ende der Übergangsflanke P verschoben ist. Um Übereinstimmung zwischen Farbsprung und etwaigem Helligkeitssprung herzustellen, wird daher nach einer Ausführungsform der Erfindung das Helligkeitssignal um einen entsprechenden Zeitbetrag verzögert. Aus verschiedenen Gründen ist in einem üblichen Fernsehempfänger im Helligkeitssignal-Kanal bereits ein Element mit einer Verzögerung von z. B. 400 ns eingeschaltet. In einer Schaltungsanordnung nach der Erfindung ist eine weitere Verzögerung um etwa 400 ns, insgesamt also z. B. 800 ns, erforderlich.

Die bisher übliche und die nach der Erfindung zusätzlich vorzunehmende Verzögerung im Helligkeitskanal hängt von der jeweils verwendeten Gesamtschaltung ab und ist entsprechend der jeweiligen Empfängertype zu wählen. Dies ist auch in integrierter Technik möglich, wenn die Helligkeits-Verzögerungsleitung mit Hilfe einer Gyratorschaltung durchgeführt wird, die ggf. auf einen gewünschten Wert mittels eines ausserhalb der Schaltung angebrachten Widerstandes eingestellt werden kann.

Im übrigen ist jedoch bei einer Schaltungsanordnung nach der Erfindung eine Einstellung von Zeitintervallen nicht erforderlich. Die Schaltflanken der Umschaltimpulse gemäss Fig. 2c werden aus dem empfangenen Signal direkt abgeleitet und werden daher abhängig von dem zugeführten Signal selbsttätig länger oder kürzer, wenn die Schaltungsanordnung nach der Erfindung in einem Farbfernsehempfänger oder dergl. eingebaut wird.

Üblicherweise werden mindestens zwei Farbsignale, vorzugsweise Farbdifferenzsignale, übertragen. Zweckmässig soll ein Schaltsignal 17 für den Schalter 5 auch dann wirksam werden, wenn in wenigstens einem anderen Farbsignal ein steiler Farbübergang auftritt. Die Schaltsignale verschiedener Schaltsignal-Generatoren 16 sind daher zweckmässig gekoppelt, wie durch die weitergeführte gestrichelte Linie 18 angedeutet ist. Dadurch kann sichergestellt werden, dass alle Farbkanten an gleicher Stelle auftreten, so dass sich der Eindruck verbesserter Farbschärfe ergibt.

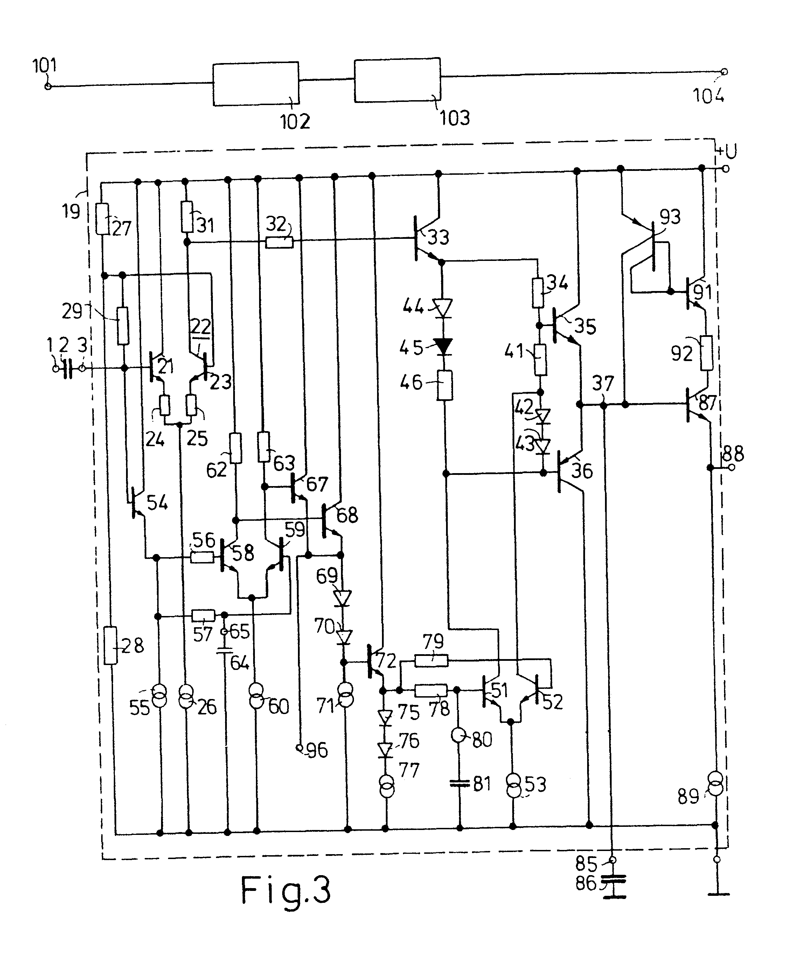

In Fig. 3 ist in näheren Einzelheiten eine Schaltungsanordnung nach Fig. 1 dargestellt.

In Fig. 3 wird von der Eingangsklemme 1 über den Trennkondensator 2 das rote Farbdifferenzsignal einem Eingang 3 einer durch die gestrichelte Grenzlinie 19 angedeuteten integrierten Schaltung zugeführt. Dieser Eingangspunkt 3 ist mit dem ersten Basiseingang eines npn-Transistors 21 in einem Differenzverstärker 22 verbunden, der zusammen mit einem zweiten npn-Transistor 23 gebildet wird. Die Emitter der Transistoren 21 und 23 sind über Widerstände 14 und 25 von 3,3 bzw. 3,5 kOhm verbunden und über eine Stromquelle 26 von 0,67 µA nach Masse angeschlossen. Zwischen der Speisequelle +U und Masse ist ein Spannungsteiler aus den Impedanzen 27 und 28 angeschaltet, von denen der eine und/oder der andere, wenigstens zum Teil, auch durch einen Transistor, z.B. eine Stromquellenschaltung, gebildet sein kann.

Der Abgriff des Spannungsteilers 27, 28 ist mit der Basis des Transistors 23 direkt und mit der Basis des Transistors 21 über einen Zwischenwiderstand 29 von 12 kOhm verbunden.

Der Kollektor des Transistors 21 liegt direkt an +U von 12 V. In dem Kollektorzweig des Transistors 23 ist ein Arbeitswiderstand 31 von 7,3 kOhm eingeschaltet, an dem das im Differenzverstärker 22 verstärkte Eingangssignal auftritt. Dieses wird über einen Längswiderstand 32 von 8 kOhm der Basis eines Emitterfolger-npn-Transistors 33 zugeführt, dessen Kollektor an +U liegt. Vom Emitter des Transistors 33 wird über einen Widerstand 34 von 4,8 kOhm die Basis eines npn-Transistors 35 angesteuert, dessen Kollektor an +U und dessen Emitter an den Emitter eines pnp-Transistors 36 angeschlossen ist, dessen Kollektor an Masse liegt. Die Transistoren 35 und 36 bilden einen Gegentaktverstärker, dessen Ausgangssignal an einem Punkt 37 auftritt. Die Basis des Transistors 36 wird von dem der Basis des Transistors 35 zugeführten Signal angesteuert über einen Widerstand 41 von 160 Ohm, der mit zwei Dioden 42 und 43 in Reihe liegt. Durch die Schaltelemente 41, 42 und 43 wird die für eine gleichmässige Aussteuerung erforderliche Ansteuerung der Verstärker 35 und 36 sichergestellt.

Der Emitterzweig des Transistors 33 enthält, parallel zur Reihenschaltung der Widerstände 34 und 41 sowie der Dioden 42 und 43, die Reihenschaltung zweier Dioden 44 und 45 und eines Widerstandes 46 von 4,8 kOhm.

Der dem Transistor 33 abgewandte Verbindungspunkt der beiden parallelen Emitterzweige und der Verbindungspunkt zwischen dem Widerstand 41 und der Diode 42 sind je an den Kollektor zweier npn-Transistoren 51 und 52 geführt, deren Emitter verbunden und über eine Stromquelle 53 an Masse angeschlossen sind. Diese Transistoren 51 und 52 liefern entsprechend der Verbindung 17 in Fig. 1 das Steuersignal, mit dem die Gegentakt-Transistoren 35 und 36 entsprechend dem Schalter 5 in Fig. 1 unwirksam gemacht werden.

Zur Steuerung dieses Umschalters wird das Eingangssignal von dem Schaltungspunkt 3 der Basis eines npn-Transistors 54 zugeführt, dessen Kollektor an +U und dessen Emitter über eine als Arbeitswiderstand wirkende Stromquelle 55 an Masse angeschlossen sind. Der Transistor 54 wirkt somit als Emitterverstärker, der über die Widerstände 56 und 57 von je 100 Ohm die Basen von npn-Transistoren 58 und 59 ansteuert, deren Emitter verbunden und über eine Stromquelle 60 an Masse angeschlossen sind. Die Transistoren 58 und 59 bilden zusammen einen Differenzverstärker, in dessen Kollektorzweigen Arbeitswiderstände 62 und 63 liegen, die an eine Speisequelle +U angeschlossen sind.

Die Basis des Transistors 59 ist weiter über einen Kondensator 64 von 220 pF mit Masse verbunden. Wegen der Grösse dieses Kondensators wird dieser zweckmässig ausserhalb einer integrierten Schaltung angebracht, wozu eine Klemme 65 verwendet werden kann, die mit der Basis des Transistors 59 in Verbindung steht. Mit dem Kondensator 64 und insbesondere dem Vorwiderstand 57 wird ein Integrationsglied gebildet, durch das das vom Transistor 54 zugeführte Signal um einige Bildpunkte verzögert an die Basis des Transistors 59 gelangt. Der Differenzverstärker 58, 59 erhält somit zwei Signale, von denen das an der Basis des Transistors 58 dem jeweiligen Farbsignal und das an der Basis des Transistors 59 dem kurze Zeit vorher vorhanden gewesenen Farbsignal entspricht. Es wird somit eine zeitliche Differenz zwischen Amplitudenwerten ausgewertet, so dass sich eine Differentiation ergibt. Das Ausgangssignal des Differenzverstärkers 58, 59 ist somit proportional zur Steilheit des zugeführten Farbsignals. Wie eingangs erwähnt, ist diese Steilheit durch die Frequenzbandbreite des vorangehenden Übertragungskanals begrenzt, und der maximale Wert tritt insbesondere dann auf, wenn im übertragenen Bild ursprünglich ein scharfer Farbsprung vorhanden war, der durch den Übertragungskanal in seiner Steilheit herabgesetzt ist. Je nachdem, ob ein Übergang zu einem grösseren oder einem kleineren Farbwert erfolgt (vgl. Fig. 2a), tritt am Kollektor des Transistors 58 oder des Transistors 59 eine höhere Spannung auf. Diese Kollektoren sind je mit der Basis eines npn-Transistors 67 bzw. 68 verbunden, deren Kollektoren an der Speisespannung +U liegen und deren Emitter verbunden sind und über zwei in Durchlassrichtung geschaltete Dioden 69 und 70 an eine Stromquelle 71 nach Masse angeschaltet sind. Solange die gegenläufige Aussteuerung an den Basen der Transistoren 67 und 68 gering ist, tritt zwar eine Differenz zwischen den Basisspannungen der Transistoren 57 und 68 auf, der absolute Wert wird aber wenig verändert, so dass auch die Spannung an den Emittern der Transistoren 67 und 68 und damit an der Kathode der Diode 70 kaum geändert ist. Ein nachgeschalteter Emitterfolger-npn-Transistor 72, dessen Kollektor an der Speisespannung +U liegt und dessen Basis an die Kathode der Diode 70 angeschlossen ist, wird daher in seiner Aussteuerung nicht verändert. Sein Emitterzweig ist über die Reihenschaltung zweier in Durchlassrichtung liegender Dioden 75 und 76 und eine Stromquelle 77 an Masse angeschlossen. Die Emitterspannung wird über Längswiderstände 78 bzw. 79 an die Basen der Transistoren 51 und 52 geführt. Zwischen der Basis des Transistors 51 und Masse ist, ggf. über eine nach aussen geführte Klemme 80, ein Kondensator 81 von 330 pF angeschlossen.

Solange nur kleine Änderungen im ankommenden Farbsignal auftreten, ändert sich die Spannung an den verbundenen Emittern der Transistoren 67 und 68 und damit an der Basis des Transistors 72 nicht. Die Spannung an den Basen der Transistoren 51 und 52 ist dann praktisch gleich, und beide Transistoren führen etwa die Hälfte des Stromes der Quelle 53. Entsprechend sind die Emitterzweige des Transistors 33 stromdurchflossen, und das der Basis des Transistors 33 zugeführte Farbsignal wird zur Ansteuerung an die Transistoren 35 und 36 übertragen.

Wenn jedoch das Farbsignal einen steileren Übergang entsprechend P oder Q in Fig. 2a zeigt, hat das in der Stufe 58, 59 differentiierte Signal einen maximalen Wert. Die Stromeinstellung, insbesondere durch die Quelle 71, ist derart, dass dann der eine oder der andere der Transistoren 67 oder 68 stromlos wird. Dann wirkt der jeweils andere Transistor als Emitterfolger, und die an seiner Basis ansteigende Spannung wird dem Transistor 72 zugeführt. Da die Transistoren 67 und 68 symmetrisch geschaltet sind, tritt an der Basis des Transistors 72 ein positiver Spannungsimpuls auf unabhängig davon, ob der Übergang im Farbsignal zu grösseren oder kleineren Werten hin erfolgt. Die Transistoren 67 und 68 wirken somit als Vollweggleichrichter. An der Vorderflanke dieses Impulses wird der Transistor 52 geöffnet, während die Spannung an der Basis des Transistors 51 infolge des Kondensators 81 zunächst festgehalten wird. Der Strom durch den Transistor 52 nimmt zu, so dass die Basisspannung des Transistors 35 zu weniger positiven Werten hin verschoben und die Basis-Emitter-Spannung des Transistors 35 negativ und dieser gesperrt wird. Andererseits wird, entsprechend der Eigenschaft als Differenzverstärker, der Kollektorstrom des Transistors 51 geringer, seine Kollektorspannung steigt an, und dementsprechend wird auch die Basis-Emitter-Spannung des Transistors 36 positiv. Der Verstärker 35, 36 ist dann also gesperrt.

Der Schaltungspunkt 37 am Ausgang des Verstärkers 35, 36 ist weiter mit einer äusseren Klemme 85 verbunden, an die ein Speicherkondensator 86 von 1 nF angeschlossen ist. Der Verstärker 35, 36 hat, wenn er normal arbeitet, eine so geringe Ausgangsimpedanz, dass der Kondensator 86 ohne Einfluss auf den Signalverlauf auf den jeweiligen momentanen Signalwert umgeladen wird. Dieser Signalwert wird weiter über einen als Emitterfolger geschalteten npn-Transistor 87 zu einer Ausgangsklemme 88 übertragen, wobei im Emitterzweig des Transistors 87 eine Stromquelle 89 eingeschaltet ist.

Wenn jedoch ein steiler Signalübergang und dementsprechend ein positiver Impuls an dem Transistor 72 auftritt, werden, wie beschrieben, die Transistoren 35 und 36 gesperrt. Dann wird der Transistor 87 nur noch von der am Kondensator 86 stehenden Spannung gesteuert, und das Ausgangssignal bleibt entsprechend der Darstellung in Fig. 2c für die Dauer des Übergangsintervalles (t' in Fig. 2a) auf dem vor Beginn des Intervalles vorhandenen Wert stehen.

Am Ende des Intervalles fällt der Steuerimpuls vom Transistor 72 weg. Da die Spannung an der Basis des Transistors 51 durch Aufladung des Kondensators 81 etwas angestiegen ist, wird die Schwelle gleicher Ströme in Transistor 51 und 52 früher und damit steiler durchlaufen als bei Ende des Steuerimpulses: Das Umschalten auf Freigabe der Endstufe 35, 36 wird also beschleunigt. Die Spannung am Kondensator 86 wird mit einer durch die Eigenschaften der dargestellten Schaltung bedingten niedrigen Zeitkonstante praktisch momentan auf den am Ende des Übergangsintervalles auftretenden Wert (vgl. N in Fig. 2a) eingestellt, wie Fig. 2d mit den steilen Flanken P3 und Q3 zeigt.

Der Kollektorstrom des Transistors 87 fliesst von der Quelle +U über einen npn-Transistor 91 und einen Widerstand 92 von 640 Ohm. Der Widerstand 92 dient dazu, im Falle eines Kurzschlusses an der Klemme 88 den Strom zu begrenzen und Zerstörungen zu vermeiden. Die Basis des Transistors 91 ist mit der Basis eines doppelten pnp-Transistors 93 verbunden, dessen Emitter an +U liegt. Der eine Kollektor des Transistors 93 ist mit der Basis des Transistors 91 verbunden und liefert den Basisstrom für den Transistor 91. Der zweite Kollektor des Transistors 93 führt der Basis des Transistors 87 auch dann Strom zu, wenn die Transistoren 35 und 36 abgeschaltet sind. Da die Kollektor-Emitter-Ströme der Transistoren 91 und 87 gleich gross sind sind – bei gleichen Typen – auch ihre Basisströme gleich, die durch den Transistor 93 gleich gehalten werden. So ist sichergestellt, dass auch bei abgeschalteten Transistoren 35 und 36 der erforderliche Basisstrom dem Transistor 87 zugeführt wird und nicht dem Kondensator 86 entnommen zu werden braucht. Die Schaltung ist daher hinsichtlich des Kondensators 86 sehr hochohmig, so dass dieser für eine gewünschte Zeitkonstante klein gewählt werden kann.

Von einem Schaltungspunkt 96 wird den Emittern der Transistoren 67 und 68 in einer Schaltung für ein weiteres Farbsignal, z.B. das blaue Farbdifferenzsignal (B–Y), die auch in der integrierten Schaltung 19 enthalten sein kann, ein in gleicher Weise gebildetes Signal zugeführt hat, dass das jeweils überwiegende Farbänderungssignal das Schaltsignal bildet und den Endverstärker 35, 36 abschaltet. So wird unabhängig davon, ob das eine oder das andere Farbsignal einen Amplitudensprung enthält, in beiden Farbsignal-Kanälen der Farbwert festgehalten und ein steilerer Übergang hervorgerufen.

Parallel zu den Farbsignalen wird in üblicher Weise das Helligkeitssignal von einer Klemme 101 über einen Verstärker 102 und eine Verzögerungsleitung 103 zu einem Ausgang 104 und dann zu einer Matrixschaltung übertragen. In einer Schaltungsanordnung nach der Erfindung wird die Verzögerung in der Stufe 103 entsprechend der Breite des Übergangsintervalles t' (vgl. Fig. 2a) länger bemessen, so dass ein steiler Helligkeitssprung und ein gemäss der Erfindung verbesserter Farbamplituden-Sprung praktisch zu gleicher Zeit im wiedergegebenen Bild auftreten.

**Patentansprüche**

1. Schaltungsanordnung zum Erhöhen der Kantenschärfe eines Videosignals, insbesondere eines Farbartsignals oder eines Farbartdifferenzsignals, bei dem an der Stelle eines scharfen Amplitudensprunges ein Übergangsbereich mit begrenzter Steilheit auftritt, wobei ein am Anfang des Übergangsbereiches auftretender (erster) Signalwert vom Signaleingang über einen Schalter dem Eingang eines Speichers zugeführt wird, dessen Ausgang während des Übergangsbereiches mit dem Signalausgang verbunden ist, und wobei danach ein bald nach dem Ende des Übergangsbereiches auftretender (zweiter) Signalwert dem Signalausgang zugeführt wird, wobei weiter ein Schaltsignal aus dem Videosignal gewonnen wird mittels eines Schaltsignalgenerators derart, dass die Anfangsflanke des Schaltsignals beim Einsetzen des Übergangsintervalles und seine rückwärtige Flanke beim Ende des Übergangsintervalles auftritt, dadurch gekennzeichnet, dass mittels des Schaltsignals (17) der am Eingang des Speichers (6) liegende Schalter (5) so gesteuert wird, dass der Speichereingang (6a) praktisch während des ganzen Übergangsbereiches (t') vom Signaleingang getrennt ist, so dass der vor dem Übergangsintervall (t') auftretende erste Signalwert (M) auf dem Speicher (6) weiter festgehalten und praktisch während des ganzen Übergangsbereiches (t') zum Signalausgang (7) übertragen wird.

2. Schaltungsanordnung nach Anspruch 1, dadurch gekennzeichnet, dass dem Signaleingang ein Farbartsignal oder Farbdifferenzsignal zugeführt wird und dass das Helligkeitssignal in einem Verzögerungselement (103) über eine etwa der Breite des Übergangsbereiches (t') entsprechende Zeit zusätzlich verzögert wird derart, dass ein zum Übergangsbereich des Farbartsignals bzw. Farbdifferenzsignals gehörender Helligkeitssprung etwa zeitgleich mit dem Ende des Übergangsbereiches auftritt.

3. Schaltungsanordnung nach Anspruch 1 oder 2, dadurch gekennzeichnet, dass der Ausgang (6b) des Speichers (6) dauernd an den Signalausgang (7) angeschlossen ist und dass der Eingang (6a) des Speichers (6) normalerweise mit dem Signaleingang (3, 4) verbunden ist und mittels des Schalters (5) während des Übergangsintervalles vom Signaleingang getrennt wird.

4. Schaltungsanordnung nach Anspruch 1 oder 2, dadurch gekennzeichnet, dass zum Gewinnen des Schaltsignals das Videosignal in einer Differentiierstufe (11) differentiiert und in einer Gleichrichterstufe (14) gleichgerichtet und das so erhaltene Änderungssignal einer, nur annähernd maximale Werte durchlassenden Abschneidestufe (16) zugeführt wird, die als Generator das Schaltsignal liefert.

5. Schaltungsanordnung nach Anspruch 4, dadurch gekennzeichnet, dass durch Differentiation wenigstens zwei Farbsignalen ein Farbänderungssignal erhalten und über eine nur annähernd maximale Werte durchlassende Abschneidestufe geführt wird, und dass die aus verschiedenen Farbsignalen abgeleiteten abgeschnittenen Farbänderungssignale in einer Kombinationsstufe (67, 68, 72) kombiniert werden, die das Schaltsignal liefert, wenn wenigstens eines der Farbsignale einen Übergang maximaler Steilheit aufweist.

6. Schaltungsanordnung nach Anspruch 4 oder 5, dadurch gekennzeichnet, dass das Videosignal einerseits direkt und andererseits über ein Integrationsglied (57, 64) den Eingängen eines Differenzverstärkers (58, 59) zugeführt wird, dessen beide gegenläufigen Ausgangssignale in ihren in einer, z.B. der positiven, Richtung verlaufenden Teilen über je einen Gleichrichter (67, 68) kombiniert werden, so dass, unabhängig von der Änderungsrichtung, ein dem Betrag der Änderung proportionales Signal erhalten wird, wobei die Integrationszeitkonstante kleiner als, vorzugsweise klein gegen, die Breite des Übergangsintervalles ist.

7. Schaltungsanordnung nach einem der vorangehenden Ansprüche, dadurch gekennzeichnet, dass das Schaltsignal einerseits direkt und andererseits über ein Integrationsglied (78, 81) den Eingängen eines Differenzverstärkers (51, 52) zugeführt wird, dessen Ausgangssignal den Umschalter steuert, wobei die Integrations-Zeitkonstante in der Grössenordnung der Breite des Übergangsintervalles liegt.

**Claims**

1. A circuit arrangement for enhancing the edge steepness of a video signal, more specifically a chrominance signal or a colour difference signal, in which in the region of a sudden amplitude jump a transition interval with limited slope occurs, a (first) signal value occurring at the beginning of the transition interval being applied via a switch from the signal input to the input of a store whose output is connected to the signal output during the transition interval and a (second) signal value occurring soon after the end of the transmission interval being applied to the signal output, furthermore a switching signal being recovered from the video signal by means of a switching signal generator in such a manner that the leading edge of the switching signal occurs at the start of the transition interval and its trailing edge at the end of the transition interval, characterized in that the switching signal (17) so drives the switch (5) arranged at the input of the store (6) that the input (6a) of the store is isolated from the signal input during substantially the overall transition interval (t'), so that the first signal value (M) occurring before the transition interval (t') is further retained in the store (6) and is transmittet to the signal output (7) during substantially the overall transition interval (t').

2. A circuit arrangement as claimed in Claim 1, characterized in that a chrominance signal or a colour difference signal is applied to the signal input and that the luminance signal is additionally delayed in a delay element (103) for a period of time approximately corresponding to the width of the transition interval (t'), in such a manner that a sudden luminance transient associated with the transition interval of the chrominance signal or colour difference signal, respectively, occurs approximately simultaneously with the end of the transition interval.

3. A circuit arrangement as claimed in Claim 1 or Claim 2, characterized in that the output (6b) of the store (6) is permanently connected to the signal output (7) and that the input (6a) of the store (6) is normally connected to the signal input (3, 4) and during the transition interval is isolated from the signal input by means of the switch (5).

4. A circuit arrangement as claimed in Claim 1 or 2, characterized in that with the object of recovering the switching signal the video signal is differentiated in a differential stage (11) and rectified in a rectifier stage (14) and that the resultant modifying signal is applied to a clipping stage (16) which transfers only approximately maximum values and, acting as a generator, produces the switching signal.

5. A circuit arrangement as claimed in Claim 4, characterized in that by differentiation of at least two video signals a colour modifying signal is conveyed via a clipping stage which transfers only substantially maximum values, and the clipped modifying signals derived from different video signals are combined in a combining stage (67, 68, 72) which supplies the switching signal when at least one of the video signals exhibits a transition of maximum steepness.

6. A circuit arrangement as claimed in Claim 4 or 5, characterized in that the video signal is applied to the inputs of a differential amplifier (58, 59) both directly and via an integration network (57, 64), whose two oppositely directed output signals are each applied to a rectifier (67, 68) which combines their portions which are of a similar orientation, for example positively-going, so that independently of the direction of the signal variation a signal is obtained which is proportional to the magnitude of the variation, the integration time constant being smaller than, preferably small relative to, the transition-interval width.

7. A circuit arrangement as claimed in anyone of the preceeding Claims, characterized in that the switching signal is applied to the inputs of a differential amplifier (51, 52) both directly and via an integration network (78, 81), the switch being controlled by the output signal of said integration network and the integration time constant being of the order of magnitude of the transition-interval width.

**Revendications**

1. Montage de circuit destiné à augmenter la netteté des contours d'un signal vidéo, en particulier d'un signal de chrominance ou d'un signal de différence de couleur, dans lequel un domaine de transition à raideur de pente limitée se présente au lieu d'un saut brusque d'amplitude, au moyen duquel une (première) valeur de signal apparaissant au début du domaine de transition est amenée de l'entrée de signal, par l'intermédiaire d'un interrupteur, à l'entrée d'un dispositif de stockage dont la sortie est connectée à la sortie de signal pendant le domaine de transition, et au moyen duquel une (seconde) valeur de signal apparaissant peu après la fin du domaine de transition est amenée ensuite à la sortie de signal, un signal de commutation étant en outre obtenu à partir du signal vidéo au moyen d'un générateur de signal de commutation, d'une manière telle que le flanc antérieur du signal de commutation apparaisse au début de l'intervalle de transition et que son flanc postérieur apparaisse à la fin de l'intervalle de transition, caractérisé en ce qu'au moyen du signal de commutation (17), l'interrupteur (5) installé à l'entrée du dispositif de stockage (6) est commandé d'une manière telle que l'entrée (6a) du dispositif de stockage soit séparée de l'entrée de signal pratiquement pendant tout le domaine de transition (t'), de sorte que la première valeur de signal (M) apparaissant avant l'intervalle de transition (t') est retenue par le dispositif de stockage (6) et est transmise à la sortie de signal (7) pratiquement pendant tout le domaine de transition (t').

2. Montage de circuit suivant la revendication 1, caractérisé en ce qu'un signal de chrominance ou un signal de différence de couleur est appliqué à l'entrée de signal et que le signal de luminance est retardé dans un élément à retard (103) d'une durée correspondant à peu près à la largeur du domaine de transition (t'), d'une manière telle qu'un saut de luminance associé au domaine de transition du signal de chrominance ou du signal de différence de couleur se présente à peu près en même temps que la fin du domaine de transition.

3. Montage de circuit suivant la revendication 1 ou 2, caractérisé en ce que la sortie (6b) du dispositif de stockage (6) est connectée en permanence à la sortie de signal (7) et que l'entrée (6a) du dispositif de stockage (6) est normalement connectée à l'entrée de signal (3, 4) et est séparée de l'entrée de signal au moyen de l'interrupteur (5) pendant l'intervalle de transition.

4. Montage de circuit suivant la revendication 1 ou 2, caractérisé en ce que pour l'obtention du signal de commutation, le signal vidéo est différentié dans un étage de différentiation (11) et est redressé dans un étage redresseur (14) et le signal de variation ainsi obtenu est appliqué à un étage écrêteur (16) qui ne laisse passer que des valeurs approximativement maximales et qui, à titre de générateur, fournit le signal de commutation.

5. Montage de circuit suivant la revendication 4, caractérisé en ce que par différentiation d'au moins deux signaux couleur, un signal de variation de couleur est obtenu et amené à un étage écrêteur qui ne laisse passer que des valeurs approximativement maximales et que les signaux de variation de couleur écrêtés dérivés de plusieurs signaux couleur sont combinés dans un étage de combinaison (67, 68, 72) qui fournit le signal de commutation lorsqu'au moins un des signaux couleur présente une transition de raideur de pente maximale.

6. Montage de circuit suivant la revendication 4 ou 5, caractérisé en ce que le signal vidéo est appliqué, d'une part, directement et, d'autre part, par l'intermédiaire d'un élément intégrateur (57, 64) aux entrées d'un amplificateur différentiel (58, 59), dont les deux signaux de sortie antagonistes sont combinés dans leurs parties qui s'étendent dans un sens, par exemple le sens positif, chaque fois par un redresseur (67, 68), de sorte que, indépendamment du sens de la variation, un signal proportionnel à la valeur de la variation est obtenu, la constante de temps d'intégration étant plus petite que la largeur de l'intervalle de transition, de préférence petite par rapport à celle-ci.

7. Montage de circuit suivant l'une quelconque des revendications précédentes, caractérisé en ce que le signal de commutation est appliqué, d'une part, directement et, d'autre part, par l'intermédiaire d'un élément intégrateur (78, 81) aux entrées d'un amplificateur différentiel (51, 52) dont le signal de sortie commande le commutateur, la constante de temps d'intégration étant de l'ordre de grandeur de la largeur de l'intervalle de transition.

Fig.1

Fig.2

Fig.3